# EUROPEAN PATENT APPLICATION

(11) **EP 2 884 435 A1**
(43) Date of publication of application: **17.06.2015**
(21) Application number: 13816202.9
(22) Date of filing: 14.03.2013
(51) Int. Cl.: G06Q 10/00

(54) **INFORMATION PROCESSING SYSTEM AND METHOD THAT UTILIZE SOCIAL NETWORK TO IMPLEMENT NETWORK TRANSACTION**

(30) Priority: 11.07.2012 CN 201210240279
(71) Applicant: Beijing Changshengtiandi Ecommerce Co. Ltd., Beijing 100026 (CN)
(72) Inventor: YAN, Yanchun, Beijing 100026 (CN)
(74) Representative: Riebling, Peter
(86) International application number: PCT/CN2013/072574
(87) International publication number: WO 2014/008764

(57) **Abstract**

The present invention provides an information processing system of using a social network to perform network transactions, characterized in that the system comprises: a product information database for storing product information; a personal consumption space configured to publish and reside a user's subscription information; an information issuing module configured to publish the subscription information in the personal consumption space; a subscription information managing module configured to add, substitute, update and delete the subscription information; a social network building module configured to combine multiple personal consumption spaces into a social network. The present invention further provides an information processing method of using a social network to perform network transactions. The information processing system and method of using a social network to perform network transactions according to the present invention may provide convenience for information sharing and information communication between users performing network transactions.

## Description

### BACKGROUND

The present invention relates to technologies of using a network platform to perform network transactions, and particularly to an information processing system and method of using a social network to perform network transactions.

As the Internet technologies develop constantly, the Internet is used to achieve resource sharing and information interaction to an increasing degree and the demand for using a network platform to perform network transactions becomes more and more pressing. The Internet technologies are usually used during a conventional network transaction, wherein a user searches for information about desired goods via tools such as the Internet, and forms a subscription or order by himself, adds the desired goods to a shopping cart, and finally accomplish the network transaction in a way for example via bank payment, that is to say, the forming of the order is accomplished by the user himself through search, and meanwhile a goods provider only needs to process the user's order information.

However, such conventional network transaction manner cannot achieve information sharing and interaction between users having the same or similar demand for goods or subscription, and meanwhile cannot provide the goods provider with necessary goods demand information. Besides, only a one-way contact rather than interactive contact is achieved between the user and the goods provider and thereby causes waste of network resources.

### SUMMARY

In order overcome the above drawbacks in the prior art, the present invention provides an information processing system of using a social network to perform network transactions, characterized in that the system comprises:
a product information database configured to store product information;
a personal consumption space configured to publish and reside a user's subscription information;
an information issuing module configured to publish the subscription information in the personal consumption space;
a subscription information managing module configured to perform managing operations of the subscription information;
a social network building module configured to combine multiple personal consumption spaces into a social network.

According to a preferred embodiment of the present invention, the information processing system further comprises:
a product information database configured to store product information;
an extracting module configured to extract the subscription information from the personal consumption space;
a matching module configured to match the subscription information with the product information;
a feedback module configured to feed back to the personal consumption space those product information among the product information whose matching degree to the subscription information reaches a certain preset threshold.

According to another preferred embodiment of the present invention, the information processing system further comprises a login module configured to receive and verify login data used by the user to log in the personal consumption space.

According to a further preferred embodiment of the present invention, the information processing system further comprises a personal information storage space for storing personal information uploaded by the use; the verification means matching and verifying the login data with the personal information stored in the personal information storage space.

According to a further preferred embodiment of the present invention, the information processing system further comprises a network information interaction module configured to share resources and transaction information of the multiple personal consumption spaces.

According to another preferred embodiment of the present invention, the information processing system further comprises a social circle building module configured to enable multiple users to build a social circle therebetween according to their respective personal subscription information or inter-user association information, and achieve the sharing of resources and transaction information in the social circle.

According to a further preferred embodiment of the present invention, the information processing system further comprises a social information storage module configured to store social information established during person consumption.

According to another preferred embodiment of the present invention, the social network building module uses computer network technologies to build multiple personal consumption spaces into the social network.

According to a further preferred embodiment of the present invention, the verifying methods comprise one or more of biological information recognition verification, information matching verification and identification recognition authentication.

According to a further preferred embodiment of the present invention, the inter-user association formation comprises one or more of inter-user relationship, concerns for a product and personal likes.

According to a further preferred embodiment of the present invention, the social information comprises one or more of good friend information, personal micro-blog information and personal recommended information.

According to another aspect of the present invention, the present invention provides a information processing method of using a social network to perform network transactions. The network transaction is completed on a network transaction platform. The network transaction platform is provided with a user's personal consumption space as well as a product information database. The method comprises:
an information issuing step for issuing and residing a user's subscription information in the personal consumption space;
a social network building step for combining multiple personal consumption spaces into a social network.

According to another preferred embodiment of the present invention, the method further comprises a subscription information managing step for performing managing operations of the subscription information.

According to another preferred embodiment of the present invention, the method further comprises:
an extracting step for extracting the subscription information from the personal consumption space;
a matching step for matching the subscription information with product information in the product information database;
a feedback step for feeding back to the personal consumption space product information in the product information database whose matching degree to the subscription information reaches a certain preset threshold.

According to a further preferred embodiment of the present invention, the information processing method further comprises a login step for receiving and verifying login data used by the user to log in the personal consumption space.

According to a further preferred embodiment of the present invention, the verification means matching and verifying the login data with the personal information stored in the personal information storage space.

According to a further preferred embodiment of the present invention, the information processing method further comprises a network information interaction step for sharing resources and transaction information of the multiple personal consumption spaces.

According to another preferred embodiment of the present invention, the information processing method further comprises a social circle building step for enabling multiple users to build a social circle therebetween according to their respective personal subscription information or inter-user association information, and achieve the sharing of resources and transaction information in the social circle.

According to another preferred embodiment of the present invention, the information processing method further comprises a social information storage step for storing social information established during person consumption.

According to another preferred embodiment of the present invention, the social network building module uses computer network technologies to build multiple personal consumption spaces into the social network.

According to a further preferred embodiment of the present invention, the verifying methods comprise one or more of biological information recognition verification, information matching verification and identification recognition authentication.

According to a further preferred embodiment of the present invention, the inter-user association formation comprises one or more of inter-user relationship, concerns for a product and personal likes.

According to a further preferred embodiment of the present invention, the social information comprises one or more of good friend information, personal micro-blog information and personal recommended information.

The information processing system and method of using a social network to perform network transactions according to the present invention have the following advantages:

First, the information processing system and method may achieve the sharing of resources and transaction information between multiple users during network transaction;

Secondly, the information processing system and method may achieve combination of the social network and network transaction; inter-user communication in the social network is achieved via the network transaction, and convenience of network transaction is achieved through the social network;

Thirdly, multiple users may build the social network therebetween according to inter-user relationship, personal likes and information of concerns for the goods, and substantially improve interaction of the social network.

Finally, the building of such social network may provide a goods provider with more information such as demand for the goods and user groups.

### BRIEF DESCRIPTION OF THE SEVERAL VIEWS OF THE DRAWINGS

Other features, objects and advantages of the present invention will become more apparent from the following detailed description of non-limiting embodiments, when taken in conjunction with the accompanying drawings, wherein:
Fig.1 shows a block diagram illustrating a whole structure of an information processing system of using a social network to perform network transactions according to a preferred embodiment of the present invention.
Fig.2 shows a block diagram illustrating a modularized structure of an information processing system of using a social network to perform network transactions according to another preferred embodiment of the present invention.
Fig.3 illustrates a flow chart of an information processing method of using a social network to perform network transactions according to a preferred embodiment of the present invention.
Fig.4 illustrates a flow chart of an information processing method of using a social network to perform network transactions according to a preferred embodiment of the present invention, wherein a network information interaction step is included.
Fig.5 illustrates a flow chart of an information processing method of using a social network to perform network transactions according to a preferred embodiment of the present invention, wherein a social circle building step is included.
Figs.6-7 are exemplary views illustrating a procedure of a user performing a whole network transaction and social network building, in the information processing system and method of using a social network to perform network transactions according to a preferred embodiment of the present invention.

The same or similar reference in the drawings generally refers to the same or similar components.

### DETAILED DESCRIPTION

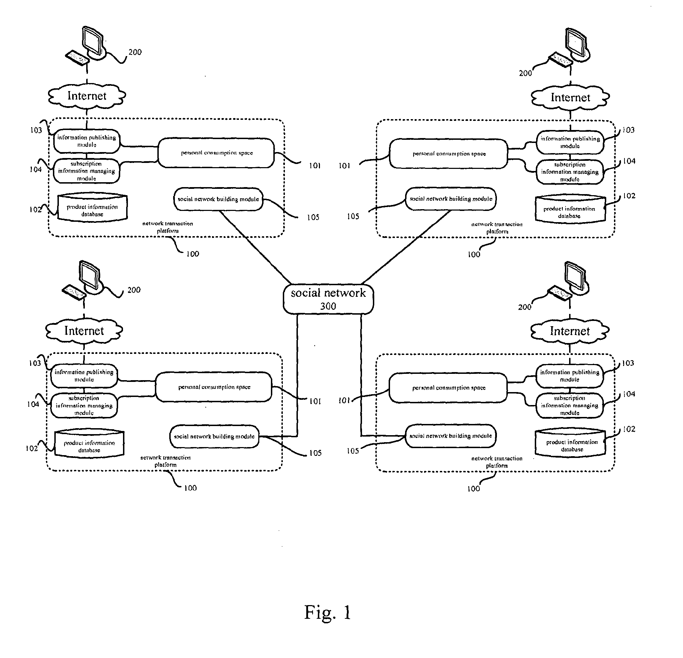

The present invention will be described in more detail with reference to Figs. 1-7 to better understand and illustrate the present invention.

Fig.1 shows a block diagram illustrating a whole structure of an information processing system of using a social network to perform network transactions according to a preferred embodiment of the present invention. As shown in Fig.1, the system 100 comprises:
a product information database 102 configured to store product information;
a personal consumption space 101 configured to publish and reside a user's subscription information;
an information issuing module 103 configured to publish the subscription information in the personal consumption space 101;
a subscription information managing module 104 configured to add, substitute, update and delete the subscription information;
a social network building module 105 configured to combine a plurality of said personal consumption spaces into a social network 300.

Specifically, in the present embodiment, the system 100 is implemented as a network transaction platform 100. Typically, the network transaction platform 100 is implemented as B/S architecture or C/S architecture which is easily used in a cross-platform manner, preferably implemented as the B/S architecture. Modules in the network transaction platform 100 are designed and operated based on said architectures.

The product information database 102 may be implemented by employing known technologies and configured to store product information. The product information may comprise product-related property data and description data. Typically, the product information database 102 is integrated in the network transaction platform 100. In some other embodiments, the product information database 102 may be implemented as a distributed server system, a server cluster or a server logic matrix constituted by a plurality of network servers.

In the present embodiment, the personal consumption space 101 is integrated and resided on the network transaction platform 100 (in the text, the term "reside" refers to storing data and performing data invoking with respect to the stored data at any time); the subscription information is stored and resided in the personal consumption space 101.

The information issuing module 103 publishes the subscription information and sends it to the personal consumption space 101. As shown in Fig.1, typically the information issuing module provides an input interface for a terminal 200 to input detailed content of the subscription information. The input interface may be implemented as a browser running on the terminal 200 or a computer data input interface on a client, for example a webpage that can receive input data. Noticeably, specific forms of the terminal 200 include but are not limited to a personal computer terminal in the present embodiment, and they further include smart mobile phones, flat panel computers, hand-held smart terminals or other smart terminals.

More typically, the subscription information is personal demand information published by the user and comprises one or more items among types, names, characteristics, brands, prices, inventory, promotional information, merchant, exhibit pictures or video and webpage links of products to be purchased. The information issuing module 103 processes one or more items in the personal demand information in the form of a data table and publish it in the personal consumption space 101. Preferably, a user using the input interface of the terminal 200 feeds back a input operation of checking selection or filling in the above personal demand information to the information issuing module 103.

After the personal consumption space 101 stores and resides the subscription information, it may be set as private subscription information. Only authorized users may invoke the information for review or modification; the subscription information may be published publicly so that all or partial specific users of the network transaction platform 100 may review the subscription information. In a preferred embodiment, the above two methods may be used in combination.

The subscription information managing module 104 is configured to manage the subscription information. Specifically, the user may perform, in the module, managing operations of the subscription information, for example, add, substitute, update or delete the subscription information.

The social network building module 105 is configured to combine a plurality of said personal consumption spaces into a social network 300 as shown in the figure. Specifically, the social network 300 may be implemented by using a conventional computer network technology, or implemented as communicating with the current Internet to form the social network 300. Certainly, as the number of users in the social network 300 increases, an individual or dedicated server or station may be set to achieve the user's information interaction, resource sharing, user management and the like in the social network 300. As shown in the figure, the number of personal consumption spaces is four. But this is only exemplary for illustration. The number of users in the built social network 300 may be selected in many ways according to information such as inter-user relationship, individual's likes and concerns for goods. In addition, the social network building module 105, during the building of the social network 300, may manage the user's social information, for example, forward the social information. Specifically, the social network 300 is built with the personal consumption space as an original point. The personal consumption space is a basic unit of the social network 300. Each said personal consumption space carries social functions needed by a single user in the social network 300. According to properties of the personal consumption space, for example, a user may build on his own various social networks according to his own likes, relationship between multiple users as well as concerns and likes for similar goods, to achieve multiple channel and pluralism of information communication and sharing and sharing of the transaction information.

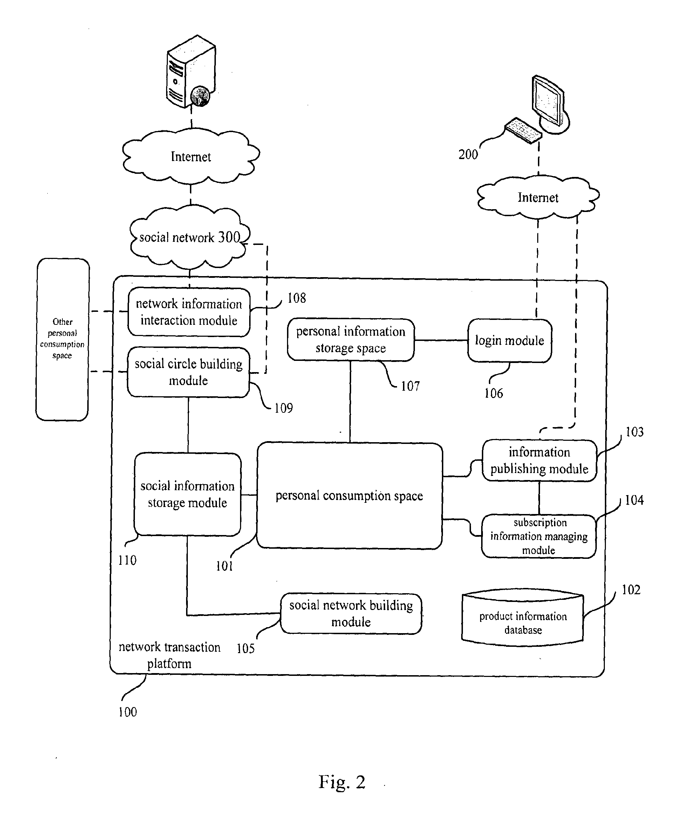

Furthermore, referring to Fig.2, Fig.2 shows a block diagram illustrating a modularized structure of an information processing system of using a social network to perform network transactions according to another preferred embodiment of the present invention. In essence, it is an optimized improvement to the system 100 shown in Fig.1 to meet more application needs. Portions of the systems will be described respectively. The same modules as shown in the schematic view of modularized structure of the information processing system shown in Fig.1 are not described any more here.

Preferably, the system 100 further comprises a login module 106 configured to receive and verify login data used by the user to log in the personal consumption space 101, similar to other typical systems with B/S architecture. Typically, the system 100 may be implemented as a user management mode based on a registered user. After the user registers in the system 100 for the first time, when he uses the terminal 200 to access to the system 100 for operation next time, he first at least sends a set of login data including the user's name and login password to the login module for verification of the user's identity. Alternatively, after the user registers in the system 100 for the first time, he at least uploads personal information such as user's name and login password to facilitate verification when he logs in next time. The system 100 optionally comprises a personal information storage space 107 for storing the personal information. Correspondingly, verification performed in the login module 106 refers to matching and verifying the login data and the personal information stored in the personal information storage space to check the user's identity, and opening an access right preset in the system 100 on this basis. Certainly, according to different personal information uploaded by the users, the user login module 106 may automatically select an appropriate verifying method, for example, uploading one or more of biological information data, conventional user name/password data and identification data. Correspondingly, the verifying method comprises one or more of biological information recognition verification (e.g., fingerprint data verification), information matching verification (user name/password verification) and identification recognition authentication (e.g., authentication of peripheral passwords of a portable computer). In a preferred embodiment, the login module 106 should be designed with a capability of multiple data verification.

Preferably, in order to provide the user with more personalized services, the personal information storage space 107 may contain common network community function modules such as personal homepage, personal documents, personal log, personal album/video, social map and social circle. In a preferred embodiment, the personal information storage space 107 may be integrated with the personal consumption space 101, and the two spaces share data to facilitate management thereof by the user.

Preferably, the system comprises a network information interaction module 108 which may achieve resource sharing and transaction information sharing between multiple users' personal consumption spaces. Preferably, the network information interaction module 108 may carry various information, for example, information such as quality, price and inventory of the goods and concerns for the goods, and information about transaction volume information of the related goods, to provide information support for the user upon selecting and purchasing the goods. Connection between the network information interaction modules 108 is achieved by the social network 300 or other application-type networks. The connection may employ a conventional network building mode or a self-defined network building mode so that mutual communication and information interaction may be achieved between a plurality of network information interaction modules 108.

Preferably, the system comprises a social circle building module 109. In the module, multiple users achieve the sharing of resources and transaction information in the social circle according to their respective personal subscription information or inter-user association information. Generally, the social circle may be a circle of relatives and friends; according to their own subscription information, for example, businesses having the same interest for similar goods, the users may build a social circle belonging to these businesses; a social circle may be built between clients and businesses due to some association information; meanwhile, the social circle may also become a special realization form of the social network. In one word, the social circle may achieve excellent information interaction and communication. Safety of information interaction and communication may be enhanced by setting a password or by verification modes such as information authentication during information interaction and communication. The inter-user association information may comprise one or more of inter-user relationship, concerns for a product and personal likes. For example, it may comprise user self-property association information, for example inter-user kinship; it may also comprise inter-user social relationship such as superior-subordinate relationship.

Preferably, the system comprises a social information storage module 110. The social information storage module 110 may contain a friend information module, a circle information module, a topic information module and a micro-blog information module, wherein the friend information module has a person-searching function and a friend-recommending function; the circle information module enables a user build a communication circle according to the user's own likes; the topic module may make a topic of an individual's interest known by other users so that an association is built with other users, and information communication and interaction is performed with respect to identical or similar interesting topics; the micro-blog information module contains personal micro-blog information such as association information like micro-blog address. Meanwhile, the social information storage module 110 and the social network building module 105 provides the user with micro-blog-issuing, forwarding, commenting, collecting and sharing functions. Specifically, the social network building module 105 may publish an article in the micro-blog and meanwhile may forward related social information such as friend-making information and topic information; besides, product-related information may be commented, such as goods delivery information of businesses, product quality information and the like; meanwhile information of good product information may be collected and shared by other users.

Usually the system integrates a network transaction function with respect to the subscription information. Preferably, the system further comprises:

An extracting module configured to extract the subscription information from the personal consumption space;

A matching module configured to perform match processing for the subscription information to the product information;

A feedback module configured to feed back to the personal consumption space those product information among the product information whose matching degree to the subscription information reaches a certain preset threshold.

Specifically, the extracting module is configured to extract the subscription information from the personal consumption space 101. Typically, during background processing, the extracting module converts the subscription information into data that can be identified and compared by the matching module and sends its to the matching module.

The matching module performs data interaction with the product information database 102 and matches the subscription information with product information stored in the product information database 102. Specific methods for implementing the matching include but are not limited to: performing character matching, word matching, figure matching, annotation matching or fuzzy matching between the subscription information and the product information. Typically, the matching module may at least generate one or more matching factors according to the subscription information, for example, key words, figure characteristic value, known annotation properties of words (e.g., synonyms) and the like, and correspondingly, based on the matching factors, send a query matching request to the product information database 102 to obtain a result. The above procedure of implementing matching in the product information database 102 according to the matching factors is a commonly-used database query technology in the art and will not be described in detail for the sake of brevity.

The feedback module may perform data interaction with the product information database 102 as well as the personal consumption space, to feed back to the personal consumption space 101 those product information among the product information stored in the product information database 102 whose matching degree to the subscription information reaches a certain preset threshold. Specifically, in actual application, since the data quantity is the product information is huge, a purpose of setting the threshold is to select from the product information matching information that is purposeful relative to the subscription information, that is, the matching information is a subset of the product information. The product information is electronic data for describing properties of actual products. Typically, the product information at least comprises one or more items among types, names, characteristics, brands, prices, inventory, promotional information, merchant, exhibit pictures or video and webpage links of the products, as well as transaction history or evaluation information of the products.

Fig.2 does not show the above extracting module, matching module and feedback module. Those skilled in the art should appreciate that the above modules may be integrated in the system depending on current computer technologies.

Preferably, the above modules may work in real time or at a set time. Reasonable arrangement of the real-time or set-time work of the above modules may improve the processing efficiency of the system 100 and reduce the load of the system when the access amount reaches a peak value.

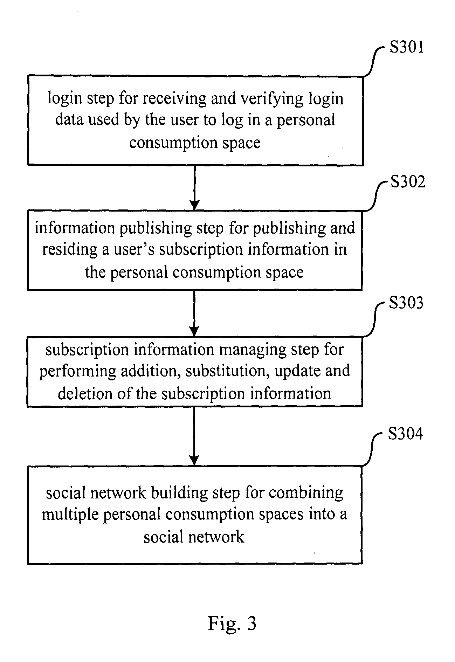

On the other hand, the method provided by the present invention will be described with reference to definitions of related terms in embodiments shown in Fig.1 and Fig.2. Reference is made to Figs.3-5.

Fig.3 illustrates a flow chart of an information processing method of using a social network to perform network transactions according to a preferred embodiment of the present invention. As shown in Fig.3, the method comprises a login step S301 to receive and verify login data used by the user to log in the personal consumption space 101, similar to other typical systems with B/S architecture. Typically, the system 100 used by the method may be implemented as a user management mode based on a registered user. After the user registers in the system 100 for the first time, when he accesses to the system 100 for operation next time, he first at least sends a set of login data including the user's name and login password to the login module 106 for verification of the user's identity. Alternatively, after the user registers in the system 100 for the first time, he at least uploads personal information such as user's name and login password to facilitate verification when he logs in next time. Preferably, verification performed in the login module 106 refers to matching and verifying the login data and the personal information stored in the personal information storage space in the personal consumption space to check the user's identity, and opening an access right preset in the system 100 on this basis. Certainly, according to different personal information uploaded by the users, appropriate verifying method can be automatically selected, for example, uploading one or more of biological information data, conventional user name/password data and identification data. Correspondingly, the verifying method comprises one or more of biological information recognition verification (e.g., fingerprint data verification), information matching verification (user name/password verification) and identification recognition authentication (e.g., authentication of peripheral passwords of a portable computer).

Thereafter, the flow proceeds to an information issuing step S302 for issuing and residing user's subscription information in the personal consumption space; the user publishes the subscription information in the personal consumption space and the subscription information is resided in the personal consumption space, wherein the subscription information may be obtained by the personal consumption space from other network storage positions, or an individual module for issuing subscription information may also be built in the personal consumption space. The subscription information is usually stored in the personal subscription information module in the personal consumption space, or stored in a sharing module where the user communicates with others. Certainly, other storage positions and storage manners may also be employed.

Alternatively, there is a subscription information managing step S303 for implementing addition, substitution, update and deletion of the subscription information; the step mainly achieves real-time management of the subscription information, for example, timely update and deletion of information, which facilitates efficient use of the storage space in the personal consumption space, and meanwhile makes the user's management of the subscription information more simplified; in another embodiment, step S303 is not executed immediately after step S302 is executed, for example, step S304 is directly executed and step S303 may be executed after S304 is executed.

Finally, the flow proceeds to a social network building step S304 for combining a plurality of said personal consumption spaces into a social network. Specifically, the social network is built with the personal consumption space as an original point. The personal consumption space is a basic unit of the social network. Each said personal consumption space carries social functions needed by a single user in the social network. According to properties of the personal consumption space, for example, a user may build on his own various social networks according to his own likes, relationship between multiple users as well as concerns and likes for similar goods, to achieve multiple channel and pluralism of information communication and sharing and sharing of the transaction information.

Since the present method achieves social network based on network transactions, the present method preferably comprises the following steps (not shown in Fig.3):

A extracting step for extracting the subscription information from the personal consumption space;

A matching step for matching the subscription information with the product information in the product information database;

A feedback step for feeding back to the personal consumption space product information in the product information database whose matching degree to the subscription information reaches a certain preset threshold.

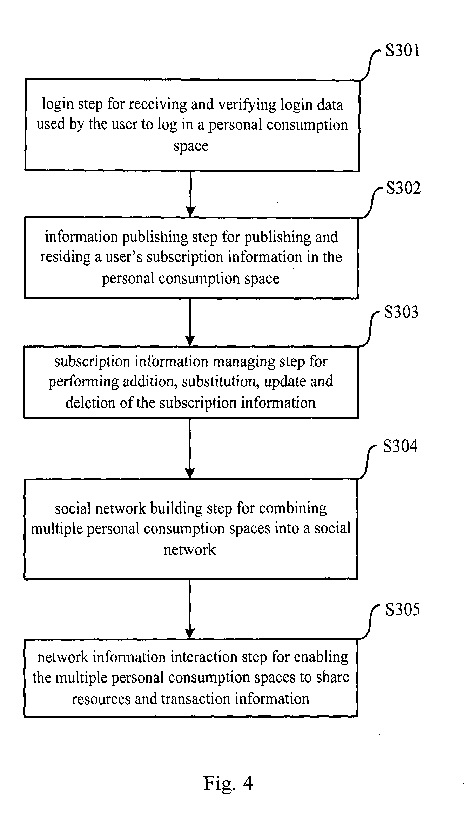

Referring to Fig.4, Fig.4 illustrates a flow chart of a information processing method of using a social network to perform network transactions according to a preferred embodiment of the present invention, wherein a network information interaction step is included. The same steps in Fig.4 as those in the flow chart of the method shown in Fig.3 will not be described in detail. According to the method as shown in the flowchart, the following steps are performed after step S304:

A network information interaction step S305 for enabling the multiple personal consumption spaces to share resources and transaction information. Specifically, after the social network is built, all personal consumption spaces in the social network may share resources in the network and every user's transaction information. Preferably, different access rights may be set for multiple personal consumption spaces in the social network so that the sharing of the resources and sharing of the transaction information are set hierarchically. Besides, said multiple personal consumption spaces may achieve interaction of information and the sharing of the resources by means of other networks besides the social network, such as conventional Internet.

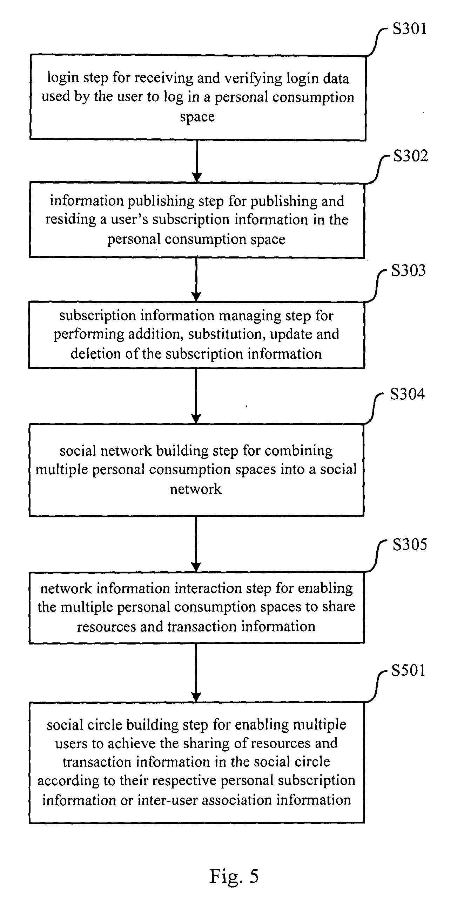

Referring to Fig.5, Fig.5 illustrates a flow chart of an information processing method of using a social network to perform network transactions according to a preferred embodiment of the present invention, wherein a social circle building step is included. The same steps in Fig.5 as those in the flow chart of the method shown in Fig.4 will not be described in detail. A social circle building step S501 is added to the embodiment shown in Fig.5. In step S501, users achieve the sharing of resources and transaction information in the social circle according to their own personal subscription information or inter-use association information. Generally, the building of the social circle may be achieved after the network information interaction step, or achieved during the network information interaction. Step S501 following step S305 as shown in the figure is only an example of one situation; in addition, the social circle may be a circle of relatives and friends; according to their own subscription information, for example, businesses having the same interest for similar goods, the users may build a social circle belonging to these businesses; a social circle may be built between clients and businesses due to some association information; meanwhile, the social circle may also become a special realization form of the social network. In one word, the social circle may achieve excellent information interaction and communication, and safety of information interaction and communication may be enhanced by setting a password or by verification modes such as information authentication during information interaction and communication.

Preferably, the method further comprises the following steps: creating a social information storage module in the personal consumption space to store the social information established by an individual during consumption. Specifically, the social information includes practical information very important for users such as friend circle information, relatives information and friend information, provides necessary information for the user's management of the personal consumption space, and meanwhile the social information provides necessary information support for the user to create new social network or social circle in the future.

For the sake of better understanding of the present invention, an example of the system of using the social network to perform network transaction according to the present invention will be presented hereunder to make technical solutions claimed in the present invention and the essence of the present invention more apparent. Specific depictions are presented as follows:

First, the present invention is described from a whole flow of the user using the personal consumption space to achieve network transaction.

The user establishes the personal consumption space in a network transaction platform. A specific implementation form is to build a MY STORE. The MY STORE has goods subscription structures. Optionally, in the present embodiment, the goods subscription structures are set as one or more goods shelves in one webpage. The goods shelf is a carrier where the user publishes the subscription information as well as a carrier where a processor extracts the subscription information. The goods shelf may be a fixed goods shelf or a self-defined goods shelf. Typically, the goods shelf carries a shopping tag customized by one or more users. What is displayed in the goods shelf may be for example exhibition of a single item of goods obtained by searching according to the shopping tag. Then, during the user's subscription to the goods, upon completion of subscription confirmation, the user places the single item related to the subscription information on My Shelf. The subscribing methods usually include the following two methods:

Search subscription: batch subscription may be achieved by subscribing according to search result;

Direct subscription: one-to-one subscription may be achieved in the homepage of the subscribed object.

Certainly, other subscription manners may be employed. Selection or combination of multiple subscription manners may be performed according to different resources of users themselves.

The subscribed objects usually comprise retailers, classes, brands and single items. Certainly, other subscribed objects may be set, for example, promotions, price zones and the like.

As far as the user himself is concerned, the subscribed goods mainly originate from the retailer subscribed by himself, MY STORE, and his own friends, such as relatives, friends, family members and good friends in the circle of interest.

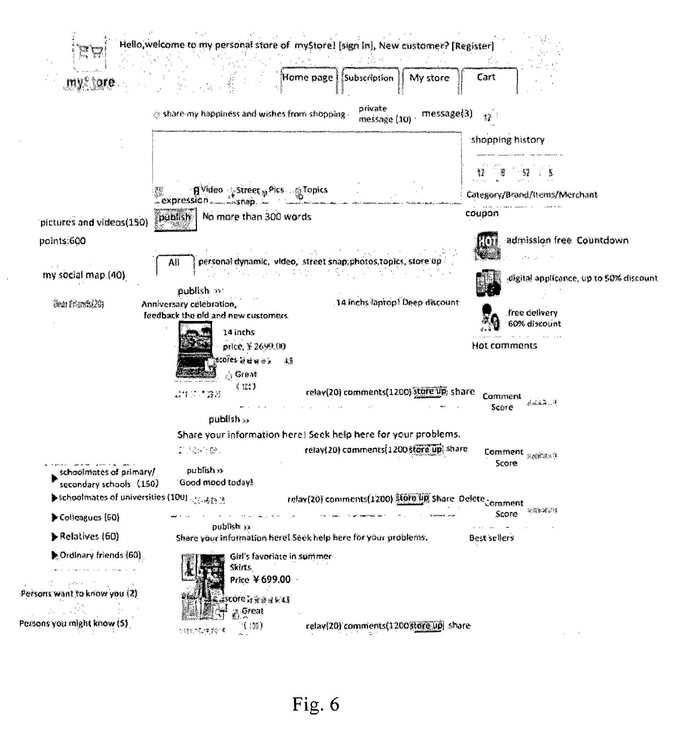

An example of using the social network to perform network transaction will be described with reference to Figs.6-7 as below:

The user first logs in the homepage of MY STORE via a network interface. As shown in Fig.6, the system will inquire whether the user is a new user. A new user cannot log in MY STORE unless he registers. After logging in MY STORE, the user can see an interface shown in Fig.6. There is an "publish" button in Fig.6, and the user may achieve issuance of "subscription" information via the "publish" button; besides, a My Social Map (40 persons are shown) is also presented in the figure and includes schoolmates of primary schools, secondary schools and universities, colleagues, relatives and ordinary friends, persons who want to get to know you, and persons you might know. Preferably, My Social Map may further include other modules such as May Good Friends, May Social Circle and the like.

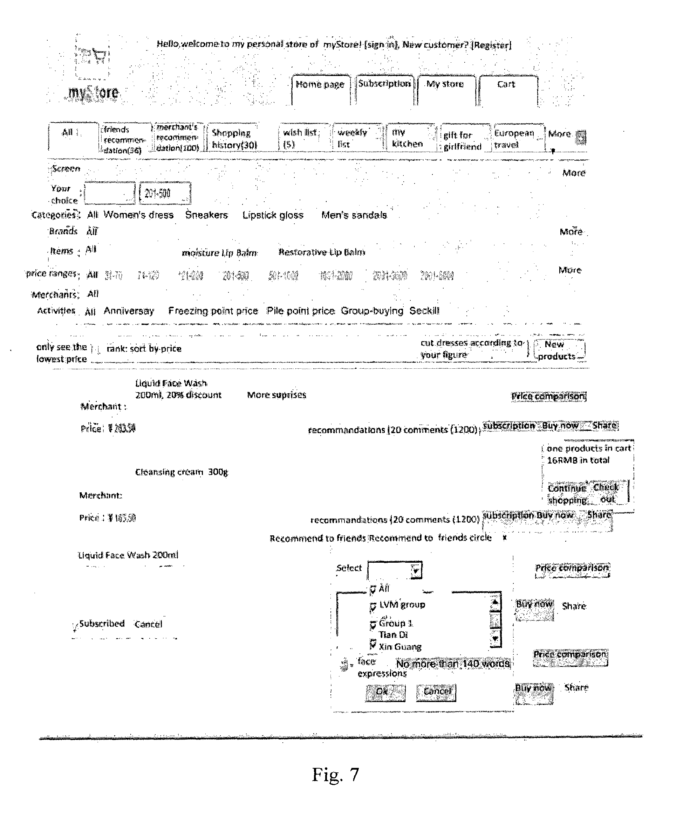

Fig.7 illustrates an example including social circles. As shown in Fig.7, the user's social circles may be selected. As shown in the figure, the social circles includes for example LVM group, group 1 and Tian Di Xin Guang (the name of a shopping mall). LVM group represents good friends, school mates and friends who all are interested in LVM brand, members in group 1 may be self-defined by the user, for example, friends in a ball team; in addition, Tian Di Xin Guang represents information of service provides or businesses, i.e., selecting a goods provider; it can be seen that types and number of the user's social circles may be selected and set in many ways. Furthermore, the figure also shows a recommending function, that is, information about goods of the user's own interest may be recommended to friends or social circles so as to realize the function of implementing network transaction by using social networks.

MY STORE is implemented on the network transaction platform in the form of a graphic user interface (GUI) or webpage. The example shown in Figs.6-7 is only exemplary, so no more detailed description is presented. The Example aims to describe a whole procedure in which the user uses MY STORE and social circles to perform personal network transaction to make the advantage of present invention more apparent.

Noticeably, in more embodiments, other types of webpage function modules may be designed to exhibit and manage subscription information published by the user and listing information of goods obtained according to the subscription information, not only limited to the goods shelves shown in the present embodiment.

Although the exemplary embodiments and their advantages have been described in detail, it is readily apparent to those having ordinary skill in the art that various alterations, substitutions and modifications may be made to the embodiments without departing from the spirit of the present invention and the scope as defined by the appended claims. For other examples, it may be easily recognized by a person of ordinary skill in the art that the order of the process steps may be changed without departing from the scope of the present invention.
The information processing method of using a social network to perform network transaction according to the present invention may be implemented by a programmable logic device or implemented as computer program software. For example, the embodiments according to the present invention may be a computer program product, which is run to cause the computer to execute the method disclosed herein. The computer program product comprises a computer readable storage medium that contains computer program logic or code portion for implementing various steps of the information processing method for a network transaction platform. The computer readable storage medium may be a built-in medium installed within the computer or a removable medium (e.g., a hot plug technique storage device) detachable from the computer body. The built-in medium includes, without limitation, a rewritable non-volatile memory, e.g., RAM, ROM, a flash memory and a hard disk. The removable medium includes, without limitation, optical storage media (e.g., CD-ROM and DVD), magneto-optical storage media (e.g., MO), magnetic storage media (e.g., tapes or removable hard disks), media with a built-in rewritable non-volatile memory (e.g., storage cards), and media with built-in ROM (e.g., ROM boxes).

Those skilled in the art may appreciate that any computer system with appropriate programming means can execute various steps of the method of the present invention which is embodied in a program product. Although most embodiments described in this specification focus on software programs, substitute embodiments that implement the method provided by the present invention as firmware and hardware also fall within the protection scope of the present invention.

It is apparent to those skilled in the art that the present invention is not limited to details of the above illustrative embodiments, and they may implement the present invention in other forms without departing from the spirit or basic features of the present invention. Therefore, nevertheless, the embodiments should be regarded as illustrative rather than limiting. The scope of the present invention is not defined by the above illustration but by the appended claims. Therefore, it is intended to embrace in the present invention all alterations that fall within the meaning and scope of equivalent elements of the claims. Any reference numeral in the claims should not be construed as limiting a claim involved. In addition, the word "comprise/comprising" does not exclude other components, unit or steps, and the singular does not exclude the plural. A plurality of components, units or means as recited in claims may also be implemented as one component, unit or means by software or hardware.

What has been disclosed above is merely some better embodiments of the present invention. The claim scope of the present invention should not be defined hereby. Equivalent changes made according to the claims of the present invention still belong to the scope of the present invention.

## Claims

1. An information processing system of using a social network to perform network transactions, **characterized in that** the system comprises:
a personal consumption space configured to publish and reside a user's subscription information;
an information issuing module configured to publish the subscription information in the personal consumption space;
a subscription information managing module configured to perform managing operations of the subscription information;
a social network building module configured to combine multiple personal consumption spaces into a social network.

2. The information processing system according to claim 1, the system further comprising:
a product information database configured to store product information;
an extracting module configured to extract the subscription information from the personal consumption space;
a matching module configured to perform matching processing for the subscription information with the product information;
a feedback module configured to feed back to the personal consumption space those product information among the product information whose matching degree to the subscription information reaches a certain preset threshold.

3. The information processing system according to claim 1 or 2, the system further comprising:
a login module configured to receive and verify login data used by the user to log in the personal consumption space.

4. The information processing system according to claim 3, the system further comprising:
a personal information storage space for storing personal information uploaded by the use;
the login data can be verified by matching and verifying the login data with the personal information stored in the personal information storage space.

5. The information processing system according to any one of claims 1-4, the system further comprising:
a network information interaction module configured to share resources and transaction information of the multiple personal consumption spaces.

6. The information processing system according to any one of claims 1-5, the system further comprising:
a social circle building module configured to enable multiple users to build a social circle therebetween according to their respective personal subscription information or inter-user association information, and achieve the sharing of resources and transaction information in the social circle.

7. The information processing system according to any one of claims 1-6, the system further comprising:
a social information storage module configured to store social information established during person consumption.

8. The information processing system according to any one of claims 1-7, wherein the verification of the login data can be implemented via one or more of biological information recognition verification, information matching verification and identification recgonition authentication.

9. The information processing system according to any one of claims 1-8, wherein the inter-user association formation comprises one or more of inter-user relationship, concerns for a product and personal likes.

10. The information processing system according to any one of claims 1-9, wherein the social information comprises one or more of good friend information, personal micro-blog information and personal recommended information.

11. An information processing method of using a social network to perform network transactions, the network transaction being implemented on a network transaction platform, the network transaction platform is provided with a user's personal consumption space as well as a product information database, the method comprising:
an information issuing step for issuing and residing a user's subscription information in the personal consumption space;
a subscription information managing step for performing managing operations of the subscription information;
a social network building step for combining multiple personal consumption spaces into a social network.

12. The information processing method according to claim 11, the method further comprising:
a subscription information managing step for performing managing operations of the subscription information.

13. The information processing method according to claim 11 or 12, the method further comprising:
an extracting step for extracting the subscription information from the personal consumption space;
a matching step for matching the subscription information with product information in the product information database;
a feedback step for feeding back to the personal consumption space product information in the product information database whose matching degree to the subscription information reaches a certain preset threshold.

14. The information processing method according to claim 12 or 13, wherein the method further comprises: a login step for receiving and verifying login data used by the user to log in the personal consumption space.

15. The information processing method according to any one of claims 11-14, wherein the login data can be verified by matching and verifying the login data with the personal information stored in the personal information storage space.

16. The information processing method according to any one of claims 11-15, wherein the method further comprises:
a network information interaction step for sharing resources and transaction information of the multiple personal consumption spaces.

17. The information processing method according to any one of claims 11-16, wherein the method further comprises:
a social circle building step for enabling multiple users to build a social circle therebetween according to their respective personal subscription information or inter-user association information, and achieve the sharing of resources and transaction information in the social circle.

18. The information processing method according to any one of claims 11-17, wherein the method further comprises:
a social information storage step for storing social information established during person consumption.

19. The information processing method according to any one of claims 11-18, wherein the social network building module uses computer network technologies to build said multiple personal consumption spaces into the social network.

20. The information processing method according to any one of claims 11-19, wherein
the verification of the login data can be implemented via :
one or more of biological information recognition verification, information matching verification and identification recognition authentication.

21. The information processing method according to any one of claims 11-20, wherein the inter-user association formation comprises one or more of inter-user relationship, concerns for a product and personal likes.

22. The information processing method according to any one of claims 11-21, wherein the social information comprises one or more of good friend information, personal micro-blog information and personal recommended information.
